(19) Europäisches Patentamt
European Patent Office
Office européen des brevets

(11) EP 1 049 108 A1

(12) # EUROPEAN PATENT APPLICATION
published in accordance with Art. 158(3) EPC

(43) Date of publication:
**02.11.2000 Bulletin 2000/44**

(21) Application number: **98947787.2**

(22) Date of filing: **08.10.1998**

(51) Int. Cl.[7]: **H01B 1/12**, H01M 10/40, C08L 27/16

(86) International application number:
**PCT/JP98/04546**

(87) International publication number:
**WO 99/28916 (10.06.1999 Gazette 1999/23)**

(84) Designated Contracting States:
**DE FR GB IT**

(30) Priority: **27.11.1997 JP 32667497**

(71) Applicant:
**Daikin Industries, Ltd.**
**Osaka-shi Osaka 530-8323 (JP)**

(72) Inventors:
- **NAKAMURA, Takayuki,**
**Yodogawa Seisakusho**
**Setsu-shi, Osaka 566-0044 (JP)**
- **INO, Tadashi,**
**Yodogawa Seisakusho**
**Settsu-shi, Osaka 566-0044 (JP)**
- **ICHIKAWA, Kenji,**
**Yodogawa Seisakusho**
**Settsu-shi, Osaka 566-0044 (JP)**
- **HIGASHIHATA, Yoshihide,**
**Daikin Ind., Ltd.**
**Kita-ku, Osaka-shi, Osaka 530-8323 (JP)**

(74) Representative: **HOFFMANN - EITLE**
**Patent- und Rechtsanwälte**
**Arabellastrasse 4**
**81925 München (DE)**

(54) **POLYMER ELECTROLYTE AND LITHIUM-BASE SECONDARY CELL MADE THEREWITH**

(57) A polymer electrolyte prepared by impregnating a vinylidene copolymer with a nonaqueous electrolyte, the copolymer comprising 35-99 mole %, particularly 75-95 mole %, of repeating units derived from vinylidene fluoride, 1-50 mole %, particularly 5-25 mole %, of repeating units derived from tetrafluoroethylene, and 0-10 mole % of a monomer copolymerizable therewith, and the copolymer having a melting point of 80°C or higher, particularly 100°C or higher, a crystallinity of 20-80%, particularly 20-50%, and a molecular weight of 50,000-500,000 (NMP solvent, calculated as polystylene).



Printed by Xerox (UK) Business Services
2.16.7 (HRS)/3.6

## Description

TECHNICAL FIELD

The present invention relates to a polymer electrolyte and a lithium secondary battery using the same.

BACKGROUND ART

In recent years, there is a growing demand for precision electric or electronic devices which are small-sized and suitable for portable use, such as audio tape recorders, camera-incorporating video tape recorders, personal computers and cellular phones. This trend entails a further demand for so-called secondary batteries which are compact, lightweight and rechargeable and have a high energy density for use in these devices as drive power sources. New secondary batteries of high performance including nickel-hydrogen batteries and lithium batteries have been made commercially available in addition to the conventional lead storage batteries and nickel-cadmium secondary batteries.

Much has recently been expected of high-performance secondary batteries for the amelioration of environmental problems such as the reduction of $CO_2$ emissions and air pollution control. Stated more specifically, electric vehicles (EVs) and so-called load conditioners for the purpose of leveling off the load of power supply are expected to be promising. EVs are adapted to obtain power mainly from the electric energy stored in secondary batteries. It is not too much to say that the performance of the EV is dependent on the energy density of the secondary battery installed in the vehicle. The load conditioner is designed to accumulate excessive electric power of nighttime in secondary batteries, which are discharged for use in the daytime in the event of a power shortage. Such load conditioners need to be installed in individual buildings and must have a high energy density because the space available is limited.

Characteristic of these uses is that high-performance secondary batteries of large size are generally required. A high safety level is also required of high-performance batteries of great size because of the large quantities of energy stored therein.

Among the new secondary batteries, expectations are great for lithium secondary batteries wherein the negative electrode comprises metallic lithium, lithium alloy, or a compound capable of absorbing and desorbing lithium ions, because of their high energy density.

Secondary batteries generally comprise a negative electrode, a positive electrode, an electrolyte (liquid electrolyte) having ionic conductivity and a separator for preventing short-circuiting between the negative and positive electrodes. Lithium secondary batteries have incorporated therein a nonaqueous liquid electrolyte, i.e., solution of a lithium salt in a carbonic acid ester or like organic solvent. Since the nonaqueous electrolyte is substantially inflammable, measures for assuring safety are important.

Especially, the separator serves to prevent short-circuiting between the negative and positive electrodes, also has the function of holding the liquid electrolyte within the battery system with good stability, and is accordingly the most important component in ensuring safety.

The separators which are most prevalently used at present are porous membranes of a hydrocarbon polyolefin resin such as polyethylene or polypropylene. These membranes have the so-called shutdown function of closing the pores when the resin melts at a high temperature of not lower than the melting point, and are capable of preventing the rupture of the battery due to an abnormal reaction. Such polyolefin resins nevertheless still remain to be improved in their ability to retain the liquid electrolyte and are likely to permit the liquid electrolyte to seep out of the battery can, hence the risk of liquid electrolyte leakage.

Proposals have been made of rendering the surface of polyolefin resin hydrophilic as by a treatment with plasma, and improving the liquid electrolyte retentivity with use of a surfactant, whereas these methods have yet to be improved in effectiveness.

As means for solving these problems, attempts have been made to dispense with liquid electrolytes or use a solid electrolyte in place of the liquid electrolyte. However, solid electrolytes have the drawback of failing to afford a great discharge current due to low electric conductivity and have not been placed into actual use.

Accordingly, attention has been directed to so-called "polymer electrolytes" which are improved in liquid electrolyte retentivity by incorporating as a separator a resin which swells in a nonaqueous liquid electrolyte. The characteristics required of polymer electrolytes include:

(1) high ability to retain the liquid electrolyte and high lithium ion conductivity,
(2) being readily available in the form of a thin membrane which has sufficient strength for use in the battery,
(3) chemical stability, especially high stability against oxidation, in the battery reaction system, and
(4) thermal stability for use at high temperatures.

Although extensive research is presently conducted on polyethylene oxide, polypropylene oxide and like polyether resins for use as polymer electrolytes, these resins are not fully satisfactory in the characteristics (1), still remaining to be improved in battery performance and safety.

Fluorine-containing polymers are generally outstanding in chemical and thermal stabilities and are thought to be of high potential ability as polymer electrolytes fulfilling the requirements (3) and (4).

For example, JP-A No. 507407/1996 describes a polymer electrolyte using a vinylidene copolymer copolymerized with about 4-12.5% (8-25 wt.%) of hexafluoropropene. JP-A No. 22727/1997 describes a polymer electrolyte using a vinylidene copolymer copolymerized with about 1.5-20% (3-40 wt.%) of hexafluoropropene.

It appears from the copolymerization ratio of hexafluoropropene that the polymer electrolytes described in these publications are cristalline polymers. Due to their comparatively low crystallinity, however, the polymers have a slight problem in film strength and have problems in nonaqueous liquid electrolyte retentivity.

An object of the invention is to provide a polymer electrolyte that is excellent in film strength, heat resistance and nonaqueous liquid electrolyte retentivity, and a lithium secondary battery using the electrolyte.

## DISCLOSURE OF INVENTION

The present invention provides the following polymer electrolytes and lithium secondary batteries.

Item 1. A polymer electrolyte prepared by impregnating a vinylidene copolymer with a nonaqueous electrolyte, the copolymer comprising 35-99 mole % of repeating units derived from vinylidene fluoride, 1-50 mole % of repeating units derived from tetrafluoroethylene and 0-20 mole % of a monomer copolymerizable therewith, and the copolymer having a melting point of 80°C or higher and a crystallinity of 20-80%.

Item 2. The polymer electrolyte according to item 1, prepared by impregnating a vinylidene copolymer with a nonaqueous electrolyte, the copolymer comprising 75-95 mole % of repeating units derived from vinylidene fluoride, 5-25 mole % of repeating units derived from tetrafluoroethylene and 0-10 mole % of a monomer copolymerizable therewith, and the copolymer having a melting point of 100°C or higher and a crystallinity of 20-50%.

Item 3. The polymer electrolyte according to item 1 or 2 wherein the vinylidene copolymer has a molecular weight of 50,000-500,000 (NMP solvent, calculated as polystylene).

Item 4. The polymer electrolyte according to item 1 or 2 wherein the monomer copolymerizable with vinylidene fluoride and tetrafluoroethylene is at least one monomer selected from the group consisting of hexafluoropropene, chlorotrifluoroethylene, 2,3,3,4,4,5,5-heptafluoro-1-pentene ($CH_2=CFCF_2CF_2CF_2H$), perfluorovinyl ether [$CF_2=CFORf$ wherein Rf is $-C_nF_{2n+1}$ (wherein n is a positive integer of 1 to 3), $-[CF_2CF(CF_3)O]_mC_nF_{2n+1}$ (wherein m and n are positive integers of 1 to 3), or $-CH_2(CF_2)_kX$ (wherein X represents H or F, and k is a positive integer of 1 to 8)].

Item 5. A polymer electrolyte prepared by forming a mixture of a vinylidene copolymer described in any one of items 1-4 and a polymer compatible with the copolymer and impregnating the mixture with a nonaqueous liquid electrolyte.

Item 6. A lithium secondary battery wherein a polymer electrolyte according to any one of items 1 to 5 is arranged between a positive electrode and a negative electrode.

The present invention will be described below in more detail.

The vinylidene copolymer of the invention has moderate crystallinity, and a melting point of 80°C or higher, preferably 100°C or higher, more preferably 100-170°C, particularly 110-160°C.

The vinylidene copolymer comprises 35-99 mole %, preferably 50-95 mole %, more preferably 75-95 mole %, particularly 80-90 mole %, of repeating units derived from vinylidene fluoride: 1-50 mole %, preferably 5-45 mole %, more preferably 5-25 mole %, particularly 10-20 mole %, of repeating units derived from tetrafluoroethylene; and 0-20 mole %, preferably 0-15 mole %, more preferably 0-10 mole %, particularly 0-5 mole %, of a monomer copolymerizable therewith.

The vinylidene copolymer has a molecular weight of 50,000-500,000, preferably 100,000-300,000.

The volume increase % by impregnating the copolymer with liquid electrolyte is 5-50%, preferably 15-30%.

The ionic conductivity of the polymer electrolyte of the invention is $2.5\times10^{-4}$S/cm$^{-1}$ or more, preferably $3.0\times10^{-4}$S/cm$^{-1}$ or more.

The tensile strength of the polymer electrolyte of the invention is 3.0 MPa or more, preferably 4.0 MPa or more.

Vinylidene copolymers comprising 95 mole % or less of vinylidene fluoride and 5 mole % or more of tetrafluoroethylene have especially good retentivity of liquid electrolyte and are highly soluble in low boiling point solvents and can easily form a solvent-impregnated film.

The crystallinity of the vinylidene copolymer is 20-80%, preferably 30-50%.

Examples of monomers copolymerizable with vinylidene fluoride and tetrafluoroethylene are maleic acid

monomethyl ester, citraconic acid monomethyl ester, citraconic acid monoethyl ester, vinylene carbonate and like unsaturated dibasic acid monoesters as described in JP-A No. 172452/1994; and $-SO_3M$, $-OSO_3M$, -COOM, $-OPO_3M$ (wherein M represents an alkali metal such as sodium or potassium), amine polar groups, namely, $-NHR^1$, $-NR^2R^3$ (wherein $R^1$, $R^2$ and $R^3$ represent alkyl) and like hydrophilic polar groups as described in JP-A No. 201316/1995. Specific examples are $CH_2$=CH-$CH_2$-Y, $CH_2$=C($CH_3$)-$CH_2$-Y, $CH_2$=CH-$CH_2$-O-CO-CH($CH_2COOR^4$)-Y, $CH_2$=CH-$CH_2$-O-$CH_2$-CH(OH)-$CH_2$-Y, $CH_2$=C($CH_3$)-CO-O-$CH_2$-$CH_2$-$CH_2$-Y, $CH_2$=CH-CO-O-$CH_2$-$CH_2$-Y, $CH_2$=CH-CO-NH-C($CH_3$)$_2$-$CH_2$-Y (wherein Y is a hydrophilic polar group and $R^4$ is alkyl), other maleic acid, maleic anhydride and the like. Monomers copolymerizable with vinylidene fluoride and tetrafluoroethylene further include $CH_2$=CH-$CH_2$-O-$(CH_2)_n$-OH (3≦n≦8),

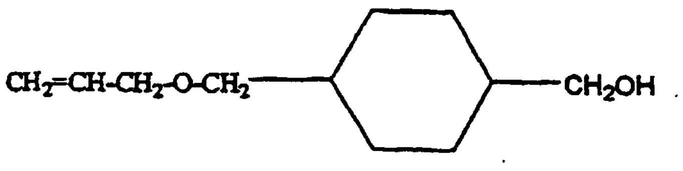

$CH_2$=CH-$CH_2$-O-($CH_2$-$CH_2$-O)$_n$-H (1≦n≦14), $CH_2$=CH-$CH_2$-O-($CH_2$-CH($CH_3$)-O)$_n$-H (1≦n≦14) and like hydroxyallyl ether monomers; allyl ether or ester monomers carboxylated and/or substituted with $-(CF_2)_n-CH_3$ (3≦n≦8), for example, $CH_2$=CH-$CH_2$-O-CO-$C_2H_4$-COOH, $CH_2$=CH-$CH_2$-O-CO-$C_5H_{10}$-COOH, $CH_2$=CH-$CH_2$-O-$C_2H_4$-$(CF_2)_nCF_3$, $CH_2$=CH-$CH_2$-CO-O-$C_2H_4$-$(CF_2)_nCF_3$, $CH_2$=C($CH_3$)-CO-O-$CH_2$-$CF_3$, etc.

Examples of useful monomers further include ethylene, propylene and like unsaturated hydrocarbon monomers ($CH_2$=CHR- wherein R is hydrogen, alkyl or halogen such as Cl), fluorine monomers such as ethylene trifluoride chloride, hexafluoropropene and hexafluoroisobutene, $CF_2$=CF-O-$C_nF_{2n+1}$ (wherein n is an hexafluoroisobutene, $CF_2$=CF-O-$C_nF_{2n+1}$ (wherein n is an integer of 1 or more), $CH_2$=CF-O-$C_nF_{2n+1}$ (wherein n is an integer of 1 or more), $CH_2$=CF-$(CF_2CF_2)_n$H (wherein n is an integer of 1 or more), and $CF_2$=CF-O-$(CF_2CF(CF_3)O)_m$-$C_nF_{2n+1}$ (wherein m and n are integers of 1 or more). Also usable are fluorine-containing ethylene monomers having at least one functional group represented by the formula (1):

$$CX_2=\overset{\displaystyle X^1 \atop |}{C}-R_f-Y \qquad (1)$$

wherein Y represents $-CH_2OH$, -COOH, a carboxylic acid salt, a carboxyester group or an epoxy group, X and $X^1$ are the same or different and independently represent hydrogen or fluorine, and $R_f$ represents a $C_{1-40}$ bivalent fluorine-containing alkylene group or a $C_{1-40}$ bivalent fluorine-containing alkylene group containing at least one ether linkage.

Preferred is at least one monomer selected from the group consisting of hexafluoropropene, chlorotrifluoroethylene, hexafluoroisobutylene, 2,3,3,4,4,5,5-heptafluoro-1-pentene ($CH_2$=$CFCF_2CF_2CF_2H$) and fluorovinyl ether ($CF_2$=CFORf wherein Rf represents $-C_nF_{2n+1}$ wherein n is a positive integer of 1-3, $-[CF_2CF(CF_3)O]_mC_nF_{2n+1}$ wherein m and n are positive integers of 1 to 3, or $-CH_2(CF_2)_kX$ wherein X represents H or F, k is a positive integer of 1-8).

The mixture of a vinylidene copolymer and a polymer compatible with the vinylidene copolymer will be described below.

Basically, any polymer can form a mixture with a vinylidene copolymer, provided that the polymer disperses or dissolves in the same solvent as used for dispersing or dissolving the vinylidene copolymer (a particularly preferred polymer, however, is a vinylidene copolymer containing vinylidene as a structural unit). Mixing methods include a method comprising separately dispersing or dissolving the polymers in a solvent and mixing them together, and a method comprising adding the polymer powders to a solvent at one time and mixing.

Polymers which are compatible with vinylidene copolymers include acrylic acid ester polymers and fluorine-containing acrylic ester polymers, for example,

$$-(CH_2=CR_1COOR_2)n-$$

[wherein $R_1$ represents H, $CH_3$ or F and $R_2$ represents CmH2m+1 (wherein m is a positive integer of 10 or less)],

$$-(CH_2=CR_1COOR_3)n-$$

(wherein $R_1$ represents H, $CH_3$ or F and $R_3$ represents $(CH_2)p(CF_2)qX$ (wherein p is 1 or 2, q is 1 to 10, and X is H or F)], and the like. Vinyl copolymers are compatible with the polymers presumably because the monomer linkage -$CH_2CF_2$- of the vinylidene polymer polarizes and interacts with a polymer having at least one functional group (polar group) such as an ester group which similarly polarizes.

In the case that cross-linking is necessary, the vinylidene copolymer is dispersed or dissolved in a solvent and a polyfunctional diacrylic acid ester monomer, oligomer or polymer is added for three-dimensional polymerization crosslinking by various methods. When necessary, an acrylic acid ester monomer may be copolymerized. A polymerization initiator can be used by usual methods, but polymerization and crosslinking by heat or active rays, especially ultraviolet irradiation is effective for producing a polymer electrolyte. Acrylic acid esters can easily form uniform crosslinked bodies because they are highly reactive with vinylidene copolymers. However, other hydrocarbon polyfunctional monomers may also be used. The polyfunctional monomer is used in an amount of 1 to 50 wt.% (preferably 1 to 10 wt.%) relative to the vinylidene copolymer. Of course, fluorine-containing diacrylic acid esters are further highly reactive with the copolymer because they have polar groups (functional groups) and a moiety containing fluorine.

The nonaqueous liquid electrolye can be produced by dissolving, for example, 0.2 to 2 mole/L of a lithium salt dissociable in a nonaqueous solvent. The nonaqueous solvent to be used in the present invention is not limited specifically. Examples of solvents usable are ethylene carbonate, propylene carbonate, butylene carbonate and like cyclic carbonates, dimethyl carbonate, diethyl carbonate, methylethyl carbonate, dipropyl carbonate and like chain carbonates, $\gamma$-butyrolactone and like cyclic esters, dimethoxyethane, diethoxyethane and like chain ether compounds. These solvents are usable singly, or in combination of at least two of them. Usable as the lithium salt which can be dissociated is any of electrolytes heretofore known, such as $LiClO_4$, $LiAsF_6$, $LiPF_6$, $LiBF_4$, LiCl, LiBr, $LiCH_3SO_3$, $LiCF_3SO_3$, $Li(CF_3SO_2)_2N$, $Li(CF_3SO_2)_3C$ and $LiSbF_6$.

The lithium secondary battery using the polymer electrolyte of the invention is produced by arranging a polymer electrolyte consisting of the polymer electrolyte of the invention and a nonaqueous liquid electrolyte, between a negative electrode and a positive electrode.

The negative electrode active material to be used, although not limited specifically, is a carbonaceous material which can be doped or dedoped with metallic lithium or lithium ions. Examples of preferred materials are polyacene, polypyrrole and like electrically conductive polymers, coke, carbonized polymer, carbon fiber, etc. Also useful are pyrolytic carbons which are great in energy density per unit volume, cokes (petroleum coke, pitch coke, coal coke and the like), carbon black (acetylene black, etc.), vitreous carbon, sintered bodies of organic polymer materials (obtained by sintering organic polymer materials at a temperature of at least 500° C in an inert gas stream or in a vacuum), carbon fiber, etc.

Although not limited particularly, the positive electrode active material to be used is, for example, a transition metal oxide such as manganese dioxide or vanadium pentoxide, transition metal sulfide such as iron sulfide or titanium sulfide, or double oxide of such a metal and lithium. From the viewpoint of high voltage and high energy density available and excellent cycle characteristics, especially useful is a double oxide represented by the formula $LiXA_1\text{-}YMYO_2$ (wherein A is at least one transition metal element selected from the group consisting of Mn, Co and Ni, M is at least one element selected from the group consisting of B, Mg, Ca, Sr, Ba, Ti, V, Cr, Mn, Fe, Co, Ni, Al, In, Nb, Mo, W, Y and Rh, $0.05 \leq X \leq 1.1$ and $0 \leq Y \leq 0.5$). More specific examples of preferred double oxides are lithium cobaltate ($LiCoO_2$), lithium nickelate ($LiNiO_2$), lithium manganate ($LiMnO_2$ or $LiMn_2O_4$).

The present inventors consider that the polymer electrolyte of the invention has increased ionic conductivity for the following reason. The reason, however, does not limit the present invention at all.

In known 2F/6F copolymers, $CF_3$ bound to the main chain by copolymerization of 6F lowers the crystallinity of the polymer. In other words, in a comparison between a 2F/4F copolymer and a 2F/6F copolymer wherein the mole percent of 6F in the copolymer is the same as the mole percent of 4F, the 2F/4F copolymer retains higher crystallinity and has higher autoagglutinating action. That is, the 2F/4F polymer has higher autoagglutinating activity than the 2F/6F polymer and is prone to autoagglutinate when the low boiling point solvent is distilled off, and the resulting increased through-holes make it easier for ions to pass.

With the high crystallinity, the polymer electrolyte has lower solubility in the liquid electrolyte. As long as the polymer has a moderate swelling property, it will do.

The polymer electrolyte of the invention is moderate in interaction with the liquid electrolyte and capable of retaining the liquid electrolyte even after through-holes are formed.

The vinylidene copolymer of the invention is crystalline and resistant to heat and has satisfactory film strength. Moreover, the copolymer of the invention is excellent in retentivity of nonaqueous liquid electrolyte.

BEST MODE OF CARRYING OUT THE INVENTION

The present invention will be described below in greater detail with reference to examples and comparative examples. The invention, however, is not limited to these examples.
The following abbreviations are used in Examples shown below.

"2F" = vinylidene fluoride;
"4F" = tetrafluoroethylene;
"6F" = hexafluoropropene;
"PC" = propylene carbonate;
"EC" = ethylene carbonate.

The molecular weight was determined by GPC (gel permeation chromatography) using a NMP solvent and calculated as polystyrene.
The melting point was determined by DSC (differential scanning calorimeter).

Example 1

The monomers of 2F/4F in the ratio of 80/20 by mole % were subjected to emulsion polymerization to provide a resin having a crystallinity of 40, a melting point of 128°C and a molecular weight of 1.4 x $10^5$ (NMP solvent, calculated as polystylene). The composition of the obtained polymer was 2F/4F=80/20. The crystallinity was determined by X-ray diffraction analysis, and the melting point was measured by DSC.
The emulsion polymerization is briefly described below. The emulsion polymerization was used in Examples 1-3.
Into a stainless steel autoclave with a capacity of 3L were placed 1500 ml of ion exchange water and 4.5 g of ammonium perfluorooctanoate. Vacuum-nitrogen replacement was repeated at room temperature 3 times. A monomer gas mixture to be used in one of Examples 1-3 was supplied to apply pressure and heated to 70°C at the same time. As a molecular weight modifier, the required amount of isopentane was added. After the pressure was stabilized at 8kg/$cm^2$G, ammonium persulfate was dissolved in a required amount of ion exchange water to initiate a polymerization reaction. Upon the pressure dropping to 7 kg/$cm^2$G, the monomer mixture was supplied again to a pressure of 8 kg/$cm^2$G. By repeating this cycle, polymerization was continued. Stirring was carried out at a speed of 300 rpm. After completion of 100 cycles, stirring was stopped and the remaining monomers were removed to discontinue the polymerization. The obtained polymer aqueous dispersion was coagulated by adding diluted nitric acid and washed with ion exchange water, followed by drying at 100°C for 16 hours. Example 2
The monomers of 2F/4F/6F in the ratio of 63.9/33.5/2.6 by mole % were subjected to emulsion polymerization to provide a resin having a crystallinity of 47, a melting point of 147°C and a molecular weight of 5.0 x $10^5$ (NMP solvent, calculated as polystylene). The composition of the obtained polymer was 2F/4F/6F=63.9/33.5/2.6.

Example 3

The monomers of 2F/4F/6F in the ratio of 65/32.3/2.7 by mole % were subjected to emulsion polymerization to provide a resin having a crystallinity of 39, a melting point of 136°C and a molecular weight of 4.0 x $10^5$ (NMP solvent, calculated as polystylene). The composition of the obtained polymer was 2F/4F/6F=65/32.3/2.7.

Comparative Example 1

As a comparative compound, a resin was prepared using the monomers of 2F/6F in the ratio of 92.0/8.0 by mole %. The obtained resin had a crystallinity of 35, a melting point of 133°C and a molecular weight of 3.2 x $10^5$ (NMP solvent, calculated as stylene).

Test Example 1 Immersion test

The resins prepared in Examples 1-3 and Comparative Example 1 were made into 100-µm-thick sheets by hot pressing. Each sheet was cut into pieces of 1 cm x 5 cm and used as samples.
On the other hand, a liquid electrolyte (hereinafter simply referred to as "electrolyte") was prepared by dissolving $LiCl_4$ in a solution of propylene carbonate and ethylene carbonate (1:1), at a concentration of 1 mole/liter. 40 g the electrolyte was placed into a 50 cc glass bottle and preserved in an argon atmosphere at 60°C.
The samples, 1 cm x 5 cm, were placed into the electrolyte at 60°C and allowed to stand for 24 hours so that

the samples were impregnated with the electrolyte, thus giving gel electrolyte membranes. The volume of each sample before and after immersion was measured to determine the volume increase %. Table 1 shows the results.

Test Example 2: Strength measurement

The resins prepared in Examples 1-3 and Comparative Example 1 were dissolved in acetone (THF) at a concentration of 10 wt.% to prepare solutions. 2 g of an electrolyte ($LiBF_4$ 1M/PC/EC) was added to the solution and fully mixed. The solution was cast on a PTFE sheet in dry air and allowed to stand at 25°C for 1 hour to volatilize THF, thus giving an approximately 100-µm-thick sheet impregnated with the electrolyte (a polymer electrolyte membrane).

The tensile strength of the sheets was determined using an autograph. Table 1 shows the results. Test Example 3: Ionic conductivity

The polymer electrolyte membranes obtained in Test Example 2 were checked for their ionic conductivity by the usual a.c. impedance method at a frequency of 20 Hz to 1 kHz using an impedance analyzer (Model 1260) manufactured by SOLARTRON. Table 1 shows the results.

Table 1

| | Ex.1 | Ex.2 | Ex.3 | Comp. Ex.1 |
|---|---|---|---|---|
| Volume increase (%) | 122 | 92 | 111 | 115 |
| Tensile strength (MPa) | 3.1 | 5.9 | 4.4 | 2.3 |
| Ionic conductivity ($S/cm^{-1}$) | $4.5x10^{-4}$ | $3.2x10^{-4}$ | $4.1x10^{-4}$ | $3.6x10^{-4}$ |
| The total evaluation | ○ | ○ | ○ | △ |

Example 4 (preparation of polymer of 2F/4F=80/20 (molar ratio)

A polymer was prepared by the following method.

Into a 6-liter autoclave with the inner surface and the mixing blades being treated with glass lining was placed 1800 ml of ion exchange water. Vacuum-nitrogen replacement was repeated at room temperature (25°C) 3 times. Then 1500 ml of perfluorocyclobutane was placed in the autoclave. Upon heating the mixture to 40°C, the internal pressure became about 5 $kg/cm^2G$. A monomer gas mixture (initial monomer mixture) of vinylidenefluoride and tetrafluoroethylene (a molar ratio of 92:8) was supplied to achieve a stabilized pressure of 13 $kg/cm^2G$. Thereafter, 5 g of a methanol solution containing 50 wt.% of normal propyl peroxide (Perloyl NPP) was added as an initiator under nitrogen pressure to initiate a polymerization reaction. Stirring was carried out at a speed of 500 rpm. Upon the pressure dropping to 12.5 $kg/cm^2G$, an additional monomer gas mixture (additional monomer mixture) of vinylidenefluoride and tetrafluoroethylene (a molar ratio of 80:20) was supplied again to a pressure of 13 $kg/cm^2G$. This cycle was repeated 50 times while the polymerization temperature was kept at 40°C. The polymerization was finished. After removing perfluorocyclobutane from the autoclave and confirming the inside became under normal pressure, the polymer was taken out. The obtained polymer was washed with 3000 ml of warm water (about 50°C) three times and dried at 110°C for 16 hours. The obtained polymer weighed 600 g.

The polymer had a crystallinity of 40 as determined by X-ray diffraction analysis, a melting point of 128 as determined by DSC, and a molecular weight of 300,000 as determined by GPC using a NMP solvent and calculated as polystyrene. Example 5 (preparation of polymer of 2F/4F=90:10 (molar ratio))

A polymer was prepared by polymerization in the same manner as in Example 4 except that the initial monomer mixture was vinylidene fluoride : tetrafluoroethylene = 97:3 (molar ratio) and the additional monomer mixture was vinylidene fluoride : tetrafluoroethylene = 90:10 (molar ratio). The obtained polymer weighed 550 g and had a crystallinity of 36, a melting point of 138°C and a molecular weight of 250,000. Example 6 (preparation of polymer of 2F/4F/6F=80/17/3 (molar ratio))

A polymer was prepared by polymerization in the same manner as in Example 4 except that the initial monomer mixture was vinylidene fluoride : tetrafluoroethylene : hexaluoropropylene = 85:5:10 (molar ratio) and the additional monomer mixture was vinylidene fluoride : tetrafluoroethylene : hexaluoropropylene = 80:17:3 (molar ratio). The obtained polymer weighed 530 g and had a crystallinity of 36, a melting point of 135°C and a molecular weight of 200,000.

Example 7 (preparation of polymer of 2F/4F=95/5 (molar ratio))

A polymer was prepared by polymerization in the same manner as in Example 4 except that the initial monomer mixture was vinylidene fluoride : tetrafluoroethylene = 98:2 (molar ratio), and the additional monomer mixture was vinylidene fluoride : tetrafluoroethylene = 95:5 (molar ratio). The obtained polymer weighed 520 g and had a crystallinity of 45, a melting point of 150°C and a molecular weight of 150,000. Example 8 (preparation of polymer of 2F/4F=75/25 (molar ratio))

A polymer was prepared by polymerization in the same manner as in Example 4 except that the initial monomer mixture was vinylidene fluoride : tetrafluoroethylene = 87:13 (molar ratio) and the additional monomer mixture was vinylidene fluoride : tetrafluoroethylene = 75:25 (molar ratio). The obtained polymer weighed 520 g and had a crystallinity of 42, a melting point of 140°C and a molecular weight of 130,000. Example 9 (preparation of polymer of 2F/4F=70/30 (molar ratio))

A polymer was prepared by polymerization in the same manner as in Example 4 except that the initial monomer mixture was vinylidene fluoride : tetrafluoroethylene = 85:15 (molar ratio) and the additional monomer mixture was vinylidene fluoride : tetrafluoroethylene = 70:30 (molar ratio). The obtained polymer weighed 560 g and had a crystallinity of 45, a melting point of 141°C and a molecular weight of 120,000. Example 10 (preparation of polymer of 2F/4F=97/3 (molar weight))

A polymer was prepared by polymerization in the saute manner as in Example 4 except that the initial monomer mixture was vinylidene fluoride : tetrafluoroethylene = 99:1 (molar ratio) and the additional monomer mixture was vinylidene fluoride : tetrafluoroethylene = 97:3 (molar ratio). The obtained polymer weighed 500 g and had a crystallinity of 49, a melting point of 160°C and a molecular weight of 220,000.

Comparative Example 2 (preparation of polymer of 2F/6F=90/10 (molar weight))

A polymer was prepared by polymerization in the same manner as in Example 4 except that the initial monomer mixture was vinylidene fluoride : hexafluroropropylene = 85:15 (molar ratio) and the additional monomer mixture was vinylidene fluoride : hexafluoropropylene = 90:10 (molar ratio). The obtained polymer weighed 530 g and had a crystallinity of 35, a melting point of 133°C and a molecular weight of 130,000.

The crystallinity of the polymers prepared in Examples 4-9 and Comparative Example 2 was determined in the following manner.

Using a X-ray diffractometer, Model RAD-RA, manufactured by Rigaku Denki Kabushiki Kaisha, wide angle x-ray diffraction was measured within a scan angle range of 10 to 30 degrees and at an output of 40 kV-50mA. Using the obtained numerical values, the crystallinity was calculated according to the following formula: 100 x (peak area derived from crystals)/ (total peak area). Films obtained by hot pressing were used as samples.

Test Example 4: Volume increase %

The resins prepared in Examples 4-9 and Comparative Example 2 were made into 100-μm-thick sheets by hot pressing. The sheets were cut into pieces of 1 cm x 5 cm and used as samples.

On the other hand, a liquid electrolyte (hereinafter simply referred to as "electrolyte") was prepared by dissolving $LiBF_4$ in a solution of propylene carbonate and ethylene carbonate (1:1), at a concentration of 1 mole %. Then 40 g of the electrolyte was placed into a 50 cc glass bottle and preserved in an argon atmosphere at 60°C.

The samples, 1 cm x 5 cm, were placed into the electrolyte at 60°C and allowed to stand for 24 hours so that the samples were impregnated with the electrolyte, thus giving gel electrolyte membranes. The volume of each sample before and after immersion was measured to determine the volume increase %. Table 2 shows the results.

Test Example 5: Tensile strength

The resins prepared in Examples 4-10 and Comparative Example 2 were dissolved in THF at a concentration of 10 wt.% to prepare solutions. 2 g of an electrolyte ($LiBF_4$ 1M/PC/EC) was added to the solution and fully mixed. The solution was cast on a PTFE sheet in dry air and allowed to stand at 25°C for 1 hour to volatilize THF, thug giving an about 100-μm-thick sheet impregnated with the electrolyte (polymer electrolyte membrane).

The tensile strength was determined using an autograph. Table 2 shows the results.

Test Example 6: Ionic conductivity (4 terminal method) 1. Preparation of samples

The polymers prepared in Examples 4-10 and Comparative Example 2 were dissolved in acetone (THF) at a concentration of 10 wt.% to prepare solutions. 2 g of an electrolyte ($LiBF_4$ 1M/PC/EC) was added to the solution. The

solution was cast to give a 100-µm-thick gel electrolyte sheet. The obtained sheet was cut into sample pieces of 1 cm x 5 cm. The ionic conductivity of the samples was measured.

2. Ionic conductivity measurement

Four platinum wires were fixed at 1 cm intervals on a PFA sheet and brought into contact with the samples. Using the outer two wires as current terminals and the inner two wires as voltage terminals, impedance was measured at a frequency of 20 Hz to 1 kHz using an impedance analyzer (Model 1280B) manufactured by SOLARTRON. The impedance of the samples was not frequency-dependent, and all the samples showed constant values. Using the obtained impedance values (Z), ionic conductivity (ρ) was calculated according to the following formula:

$\rho = I/S \times Z$ , S = Cross sectional area of the sample,
I = Distance between the voltage terminals

Table 2 shows the results.

Table 2

| | Volume Increase (%) | Tensile strength (MPa) | Ionic conductivity ($\times 10^{-4}$ S/cm$^{-1}$) | Total evaluation |
|---|---|---|---|---|
| Example 4 | 14 | 6.1 | 4.5 | ◎ |
| Example 5 | 20 | 6.0 | 4.3 | ◎ |
| Example 6 | 25 | 4.5 | 4.7 | ◎ |
| Example 7 | 12 | 5.9 | 3.0 | ○ |
| Example 8 | 12 | 3.0 | 3.5 | ○ |
| Example 9 | 10 | 2.6 | 2.5 | ○ |
| Example 10 | 5 | 7.1 | 1.5 | ○ |
| Comp. Ex. 2 | 25 | 2.0 | 3.5 | △ |

In Tables 1 and 2, the total evaluation means the average of evaluations of volume increase %, tensile strength and ionic conductivity. " ◎ " means that the sample is much above the required levels of polymer electrolyte in all the items. ○ means that the sample meets all the required levels of polymer electrolyte. "△" means that the sample fails to meet at least one of the required levels of polymer electrolyte.

## Claims

1. A polymer electrolyte prepared by impregnating a vinylidene copolymer with a nonaqueous electrolyte, the copolymer comprising 35-99 mole % of repeating units derived from vinylidene fluoride, 1-50 mole % of repeating units derived from tetrafluoroethylene, and 0-20 mole % of a monomer copolymerizable therewith, and the copolymer having a melting point of 80°C or higher and a crystallinity of 20-80%.

2. A polymer electrolyte prepared by impregnating a vinylidene copolymer with a nonaqueous electrolyte, the copolymer comprising 75-95 mole % of repeating units derived from vinylidene fluoride, 5-25 mole % of repeating units derived from tetrafluoroethylene, and 0-10 mole % of a monomer copolymerizable therewith, and the copolymer having a melting point of 100°C or higher and a crystallinity of 20-50%.

3. The polymer electrolyte according to claim 1 or 2 wherein the vinylidene copolymer has a molecular weight of 50,000-500,000 (NMP solvent, calculated as polystylene).

4. The polymer electrolyte according to claim 1 or 2 wherein the monomer copolymerizable with vinylidene fluoride and tetrafluoroethylene is at least one monomer selected from the group consisting of hexafluoropropene, chlorotrifluoroethylene, 2,3,3,4,4,5,5-heptafluoro-1-pentene ($CH_2$=$CFCF_2CF_2CF_2H$), perfluorovinyl ether ($CF_2$=CFORf wherein Rf is $-C_nF_{2n+1}$ wherein n is a positive integer of 1 to 3, $-[CF_2CF(CF_3)O]_mC_nF_{2n+1}$ wherein m and n are positive integers of 1 to 3, or $-CH_2(CF_2)_kX$ wherein X represents H or F, and k is a positive integer of 1 to 8).

**5.** A polymer electrolyte prepared by forming a mixture of a vinylidene copolymer according to any one of claims 1-4 and a polymer compatible with the copolymer and impregnating the mixture with a nonaqueous liquid electrolyte.

**6.** A lithium secondary battery wherein a polymer electrolyte according to any one of claims 1 to 5 is arranged between a positive electrode and a negative electrode.

## INTERNATIONAL SEARCH REPORT

International application No.
PCT/JP98/04546

A. CLASSIFICATION OF SUBJECT MATTER
Int.Cl$^6$ H01B1/12, H01M10/40, C08L27/16

According to International Patent Classification (IPC) or to both national classification and IPC

B. FIELDS SEARCHED

Minimum documentation searched (classification system followed by classification symbols)
Int.Cl$^6$ H01B1/06, H01B1/12, H01M10/40, C08L27/16

Documentation searched other than minimum documentation to the extent that such documents are included in the fields searched
Jitsuyo Shinan Koho 1926-1996 Toroku Jitsuyo Shinan Koho 1994-1999
Kokai Jitsuyo Shinan Koho 1971-1999 Jitsuyo Shinan Toroku Koho 1996-1999

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| PA | JP, 09-324067, A (Shin-Etsu Polymer Co., Ltd.), 16 December, 1997 (16. 12. 97), Claims ; Par. Nos. [0001], [0003] to [0006], [0031] (Family: none) | 1-6 |
| A | JP, 08-507407, A (Bell Communications Research, Inc.), 6 August, 1996 (06. 08. 96), Claims & US, 5296318, A & WO, 9420996, A & EP, 699348, A | 1-6 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
20 January, 1999 (20. 01. 99)

Date of mailing of the international search report
2 February, 1999 (02. 02. 99)

Name and mailing address of the ISA/
Japanese Patent Office

Facsimile No.

Authorized officer

Telephone No.

Form PCT/ISA/210 (second sheet) (July 1992)